# EUROPEAN PATENT APPLICATION

(11) **EP 4 198 856 A1**
(43) Date of publication of application: **21.06.2023**
(21) Application number: 20862019.5
(22) Date of filing: 25.10.2020
(51) Int. Cl.: G06Q 10/08

(54) **LOCKABLE DELIVERY BOX**

(30) Priority: 21.08.2020 SA 120420003
(71) Applicant: ALBEDAIWI, Abdullah, Riyadh 14714 (SA)
(72) Inventor: ALBEDAIWI, Abdullah, Riyadh 14714 (SA)
(74) Representative: Lorente Berges, Ana
(86) International application number: PCT/SA2020/050014
(87) International publication number: WO 2022/039637

(57) **Abstract**

The current invention reveals a box for preserving and storing goods for an interim time. The box includes container (1) with cover (2) allowing access to the box storage, a lockable device to lock cover (2), and a method for generating a random code when the cover is locked. A method can be provided to transmit the code to the recipient. The code may be encrypted. The lock may be mechanical, or it may consist of keypad (3). An additional method can be provided to activate the lock. The delivery box may also contain one or more camera (4) and/or other types of optical capture devices or data capture devices. One of the cameras may be directed inwards to provide images or videos of the delivery box contents and/or it may be used to present a real-time image of the person requesting access to the delivery box. A memory can be provided to store the code, as well as, the information recorded by the camera.

## Description

### Invention Background

The current invention is generally related to a lockable delivery container to receive deliveries, store them for an interim time and secure their delivery. It is related, more specifically, to lockable delivery box.

Home delivery has become an increasingly common way for consumers to reduce their shopping time. Home delivery not only saves consumers time and money, but can also significantly reduce gas consumption and car pollution since consumers won't have to go to traditional way in-store to buy their goods. However, home delivery service has not yet gained wide acceptance from consumers because there is currently no way to ensure a safe and convenient delivery to protect goods from tampering.

In the present times, Covid-19 outbreak has enlightened the importance of deliveries in the social distancing era. People have been using online shopping platforms to get their purchases to their doorstep - whether essential or non-essential goods. Throughout delivery companies, these goods or commodities can easily reach final distribution points, with minimal or even no contact with the customer by cooperation and acceptance of customer requests delivery service providers, such as leaving purchases on doorstep. Hence, it is a safe way to protect purchases from tampering resulting from leaving purchases on doorstep is essential.

One of the objectives of the invention is to provide a lockable delivery box to receive, store and secure the delivery.

### General Description of Invention

According to one model of the invention, the current invention provides a lockable delivery box for receipt and interim storage of deliveries.

The lockable delivery box includes a container for receiving and storing the deliveries for an interim time. It has a configured lockable cover to provide access to the storage area within the container, and a configurable place for receipt of deliveries to store them for an interim time. The lockable cover prevents access to goods in storage when the lockable cover is closed and locked. It has a lock to close the lockable cover, a lock trigger to open the lock. The lock trigger includes a keypad to allow the entry of an alphanumeric key code.

The lockable delivery box also includes a communication device practically connected to the container to control access to the container and to send a notification message including the delivery code and the estimated delivery time for the lockable delivery box. It also includes the data entry device configured to get information from goods when they are placed and/or received.

It also includes a communication unit to receive the delivery data including the estimated delivery time of the delivery box, and also prepares it to send the data message to the delivery box recipient, as the data message includes the delivery code and the estimated delivery time.

A remote communication device can be located away from the delivery box to receive the delivery code in order to open the container.

The communication device includes a control unit connected to the keypad. The control unit includes a method for getting a random code when the container is closed and locked, a means of transmitting the code to the closed and locked container recipient; and storing the capture information, a comparison method to compare the entered key code with the stored code to determine if the codes are consistent, and an activation method to activate the lock trigger in order to unlock the lock if the key codes are matching.

It is preferable that the communication unit receives communication data using a wireless data connection.

It is preferable that the estimated delivery time depends, at least partially, on specific location of a delivery vehicle scheduled to deliver for the location of delivery box recipient.

It is preferable for the connection data to be received from a PC connected to the delivery vehicle.

It is preferable for connection data to be received from a remote server connected to a computer which in turn is connected to the delivery vehicle.

It is preferable for the communication unit to have a wireless data connection over a cellular data network.

It is preferable for the data capture device to be at least one camera.

It is preferable that the lockable cover opens automatically in response to the receipt of a wireless communication notification when the delivery box recipient is in close to the delivery box. The wireless communication is sent by a transmitter in the PC of the delivery box recipient.

It is preferable that the invention also includes an adaptive rechargeable battery to provide power to the delivery box.

It is preferable that the communication unit is configured to send the message data to the smart phone of the delivery box recipient.

### Summary Description of Drawings

It is understood that the following figures and detailed description are intended to be merely an illustration of an embodiment and/ or embodiments that have been expressly disclosed and are not intended to restrict the current invention scope as stipulated in the appended claims, in figures:

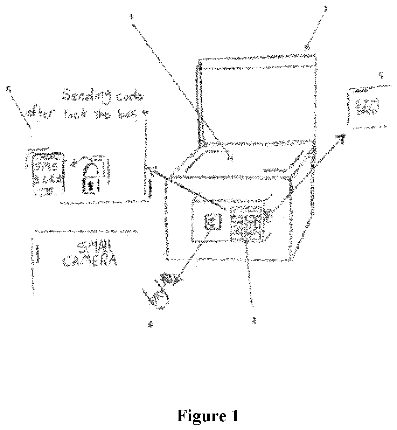

Figure 1 depicts the lockable delivery box, according to an exemplary embodiment of the current invention.

### Detailed Description

In reference to Figure 1, it illustrates that the delivery box includes container (1) for receiving and storing goods for an interim time. Container (1) has a hinged cover (1) that protects and conceals the container contents and allows access to the storage inside the container. Container (1) has anchor points to attach the container to a surface such as a wall, floor, or ground surface. Cover (2) and container (1) are arranged for interim storage and securing the deliveries placed in the container.

Container (1) comprises a top cover with hinge (2) to allow access to container (1) storage to retrieve the goods or place it in container (1) storage. Hinged top cover (2) of container (1) includes a lock-to-lock cover (2) and the lock trigger to open the lock. It is preferable that the lock trigger incorporates conventional (3) alphanumeric keypad to allow the entry of key codes. As explained in more detail below, the lock operator only unlocks it when a valid key code is entered into keyboard (3).

The delivery box may also contain one or more camera (4) and/or other types of optical capture devices or data capture devices. A camera may be pointed inside to provide pictures or video of the delivery box's contents. Thus, the delivery box recipient can verify the contents almost anywhere. The camera (s) may also contain an external camera that provides photos or videos of anyone opening or reaching the delivery box. Thus, the delivery box might keep a record of whoever reached it.

Moreover, one or more cameras (4) or optical capture devices may be used to provide a real-time image of a person requesting access to the delivery box. In other words, a person may approach the delivery box and request access using the recipient's interface. A picture of that person may be sent to the delivery box recipient to allow the recipient to decide whether they want to open or unlock the lock remotely or provide access to the delivery box for the person being captured in a photo or video. This information may be transferred to a smartphone or PC of the delivery box recipient.

The delivery box includes the communication unit (not shown in Figure 1). A communication unit may be configured to conduct one or more types of wired or wireless online communication with a communication device. The communication unit may also be able to receive and/or send direct electronic communications to/from a remote communication device.

The communication device is practically connected to container (1) to control access to the container storage (1) and to send a notification message to the container recipient. The preferred communication device (not shown in Figure 1) includes a controller and a transmitter.

It is preferred that the controller unit is a programmable logic controller (PLC), a microcomputer, or another microprocessor device. It has a traditional memory to store codes; as well as, captured information of goods.

The control unit is electrically connected to keypad (3), cover lock trigger, and camera (4). The control unit and other components of the container receive electric energy from a conventional source via wire or wires. The delivery box may also include a battery to save the backup operation of the device in the event of a power cutoff.

When container (1) is closed, cover (2) may lock automatically. Once closed and locked, the controller randomly generates an alphanumeric code. A key on the lock and/or the cover hinge sends a signal to the control unit to generate the code. Randomly, the code is supposed to be random or semi-random.

The transmitter responds to the control unit by sending the generated code to the recipient remotely from the delivery box. A transmitter may be any known communication device that is configured to send analog or digital messages over a traditional communications network, such as a telephone line, a local area network, or a wide area network, whenever connected. A transmitter may also be a wireless frequency transmitter/ receiver to transmit the resulting code by radio signals (6).

Delivery details can be provided to the recipient in several different ways; Delivery receipt, email, text message, secure website database, or phone message. A method other than a delivery slip may be preferred when the message box is not easily accessible or secure.

When the carrier arrives with the delivery shipment, the recipient enters the received code opening container (1) to accept the delivery. When a key code is entered on keyboard (3), the key code is sent to the control unit. The control unit is programmed to compare the entered key code with the stored code to determine whether the entered key code matches the stored. In this case, the control unit directs the lock operator to open cover (2).

It is preferable for container (1) to be part of the delivery system that allows sending and receiving messages from several locations far (5) from the container. For example, a telecommunications device may be placed remotely in the delivery box recipient home, and another remote-control device may be placed at the service provider. The remote telecommunications devices are similar to the communication device, whereas each includes a control unit and a transmitter.

In some cases, the delivery vehicle and/or the delivery vehicle operator may use the delivery vehicle's laptop to collect, receive, store and/or transmit information related to the delivery. Among other functions, the delivery laptop can be used to track or document when and where a package will be delivered. The delivery laptop may be connected in order to track or document the time and place the package is to be delivered on. The delivery laptop may be connected to the communication device from the delivery box. In addition, the delivery laptop may be connected to other devices or systems over the wireless network and/or through a system embedded in the delivery vehicle. As indicated here, delivery box interfaces can become part of a network of interconnected computer systems that provide and exchange information on the delivery.

The delivery box may include a variety of intelligent features that enable the delivery box recipient or operator to manage, configure, monitor and/or operate the delivery box. While some of these features may include a direct connection with the delivery box, one or more of the delivery box functions or features may be managed, configured, and/or monitored, and/or operated on or through a remote server or computing platform or used. The delivery box management server is an example of a computing system that can be used for one or more of these functions. The delivery box management server may include a server, PC, computer processor, proprietary computing platform, network storage capabilities, memory, hard drive, and/or other computer hardware components. The delivery box management server may also include software and/or other tools to perform the functions, or subsets of the functions described in various examples here. The delivery box management server can be accessed or used by any computing device, delivery box, delivery laptop, personal electronic device, vendor, warehouse, and/or other devices or parties involved in delivering the delivery to or picking the delivery from the delivery box. Although the delivery box management server is described as a single device, a delivery box management server can be distributed across a number of computing devices and/or locations. In addition to being used in managing various features, options, and/or configurations described here, a delivery box management server may also include account management tools.

In some cases, the delivery laptop may start connecting with the delivery box when it is in a specified close range. This connection may automatically establish permission to access the box like cover (2) which opens before, or completely opens whenever the recipient approaches the box, in order to make the receipt more efficient and/or convenient. In other cases, a keyboard or other device may be used to open the cover. This enhances social distancing and reduces contact, thus contributing to limiting COVID-19 from spreading.

A skilled person in this field will realize that various modifications can be made to the above-described model without deviating from the scope of the current invention. For example, the above model is described with reference to the delivery and receiving containers. However, the invention can be used in other secure containers, for example ballot boxes and storage containers.

## Claims

1. A delivery box to receive and store goods for an interim time, and the delivery box consists of:
- A container for receiving and storing goods for an interim time, including: Lockable cover, which is configured to provide access to the storage inside the container. The storage is configured to receive goods for interim safe storage. The lockable cover prevents access to the goods in storage when the lockable cover is closed and locked,
- A Lock to close the lockable cover,
- A Lock trigger to unlock the lock, which has a keypad to allow the entry of an alphanumeric key code; and
- A communication device practically connected to the container to control access to the container and to send a notification message containing the delivery code and the estimated time for delivering the delivery box; and
- A data capture device configured to capture information from the goods when goods are placed and/or received,
- It also includes a communication unit to receive the delivery data including the estimated delivery time of the delivery box, and also configures it to send the data message to the delivery box recipient, as the data message includes the delivery code and the estimated delivery time.
- A remote communication device placed away from the delivery box to receive the delivery code used for opening the container;
- Whereas the communication device includes a control unit connected to the keypad. The control unit includes:
∘ A method for generating a random code when a container is closed and locked,
∘ A means of sending the code to the recipient of the closed and locked container;
∘ A memory to store the code and the captured information,
∘ A comparison method for comparing the entered key code with the stored code to determine whether the key codes are identical, and
∘ An activation method to activate the lock trigger if the key codes match.

2. A delivery box as in Protection Element 1, where the communication unit receives the delivery data using a wireless data connection.

3. A delivery box as in Protection Element 1, where the estimated delivery time depends, at least partially, on the specific location of a delivery vehicle scheduled to deliver the goods for the delivery box recipient location.

4. A delivery box as in Protection Element 1, where delivery data is received from a PC connected to the delivery vehicle.

5. A delivery box as in Protection Element 4, where delivery data is received from a remote server connected to a PC linked to the delivery vehicle.

6. A delivery box as in Protection Element 1, where the communication unit conducts a wireless data connection over a cellular data network.

7. A delivery box as in Protection Element 1, where the data capture device is at least one camera.

8. A delivery box as in the protection element 1, where the lockable cover opens automatically in response to the receipt of a wireless communication signal when the delivery box recipient is near the delivery box. The wireless connection is sent by a transmitter in connection with a PC connected to a commendable connection received by the recipient of the delivery box.

9. A delivery box as in Protection Element 1 also includes a rechargeable battery configured to provide electric power to the delivery box.

10. A delivery box as in Protection Element 1 where the communication unit is configured to send message data to the delivery box recipient's smartphone.
